(19) Europäisches Patentamt
European Patent Office
Office européen des brevets

(11) **EP 1 801 539 B1**

(12) **FASCICULE DE BREVET EUROPEEN**

(45) Date de publication et mention
de la délivrance du brevet:
**06.06.2012 Bulletin 2012/23**

(51) Int Cl.:
***G01C 21/16*** *(2006.01)*     ***G01S 5/14*** *(2006.01)*
***G01S 1/00*** *(2006.01)*

(21) Numéro de dépôt: **06126310.9**

(22) Date de dépôt: **18.12.2006**

(54) **Dispositif d'hybridation en boucle fermée avec surveillance de l'intégrité des mesures.**

Hybridisierungsvorrichtung mit geschlossenem Regelkreis und Überwachung der Integrität der Maßnahmen

Closed loop hybridisation device with surveillance of measurement integrity

(84) Etats contractants désignés:
**DE FR GB**

(30) Priorité: **20.12.2005 FR 0512992**

(43) Date de publication de la demande:
**27.06.2007 Bulletin 2007/26**

(73) Titulaire: **THALES**
**92200 Neuilly sur Seine (FR)**

(72) Inventeurs:
  • **Martin, Nicolas**
    **Bourg les Valence 26500 (FR)**

  • **Lesot, Bertrand**
    **Valence 26000 (FR)**
  • **Coatantiec, Jacques**
    **Fauconnieres 26120 (FR)**

(74) Mandataire: **Lucas, Laurent Jacques**
**Marks & Clerk France**
**Conseils en Propriété Industrielle**
**Immeuble Visium**
**22, Avenue Aristide Briand**
**94117 Arcueil Cedex (FR)**

(56) Documents cités:
  WO-A-01/46712      WO-A-03/029755
  FR-A1- 2 866 423    US-A1- 2002 109 628

EP 1 801 539 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne un dispositif d'hybridation en boucle fermée. En particulier, l'invention s'applique à un dispositif d'hybridation embarqué sur un porteur utilisant des informations fournies par une centrale inertielle et par un système de navigation par satellite, comme par exemple un système GPS.

Les porteurs comme les aéronefs ou encore les bateaux disposent de nombreux systèmes de navigation. Parmi ces moyens de navigations, on peut notamment citer les centrales inertielles, les systèmes de radionavigation utilisant les signaux délivrés par des satellites, on désigne ces systèmes par l'acronyme G.N.S.S. (de l'anglo-saxon Global Navigation Satellite System), les baro-altimètres et les anémomètres.

Une centrale inertielle fournit des informations peu bruitées et précises à court terme. Cependant, sur le long terme, les performances en localisation d'une centrale inertielle se dégradent, plus ou moins vite en fonction de la qualité des capteurs et des traitements utilisés par la centrale. Les défauts des capteurs (accéléromètres, gyromètres) qui composent l'équipement sont en grande partie responsables de cette dégradation. Les informations acquises auprès d'un système de navigation par satellite sont quant à elles très peu susceptibles de dériver sur le long terme. En revanche, les données transmises par un système de navigation par satellite sont d'une précision variable et sont souvent bruitées.

Les systèmes de navigation hybride utilisent notamment les données provenant d'un système de navigation par satellite et d'une centrale inertielle pour délivrer en outre des informations de position et de vitesse relatives au porteur. La surveillance de l'intégrité des systèmes de navigation hybride est généralement réalisée grâce à un banc de filtres de Kalman en parallèle. Ces filtres réalisent l'hybridation entre les informations issues du système de navigation par satellite et la centrale inertielle. Un des filtres du banc de filtres en parallèle, désigné par le terme de filtre principal, utilise toutes les mesures GNSS appelées pseudo-mesures et informations dont il dispose. Les autres filtres, dit secondaires, du banc de filtres en parallèle ne font usage que d'une partie seulement des mesures et informations disponibles. Si une panne survient au niveau d'une mesure satellite, celle-ci ne sera pas vue par le filtre ne recevant pas cette mesure : ce filtre restera donc intègre.

Toutefois, l'utilisation de cette architecture s'avère problématique lorsque l'on souhaite réaliser une hybridation en boucle fermée, c'est-à-dire lorsque l'on souhaite appliquer directement les corrections calculées par le filtre Kalman au niveau du dispositif de calculs inertiels appelé plate forme virtuelle de la centrale inertielle. En effet, la présence d'une panne satellite se répercute alors directement sur les mesures inertielles. La plate forme virtuelle est alors « polluée » par des corrections erronées du fait de l'utilisation de mesures provenant d'un satellite défaillant pour l'élaboration des corrections. Il est en outre possible d' entretenir autant de plates formes virtuelles qu'il y a de filtres de Kalman ce qui nécessite de nombreux calculs. Ce problème n'apparaît pas cependant pour une hybridation en boucle ouverte où aucune correction provenant du filtre de Kalman n'est appliquée directement sur la plate forme virtuelle. Mais, dans certains cas, par exemple lorsque la qualité des capteurs inertiels ne permet pas de maintenir les erreurs inertielles modélisées par le filtre de Kalman dans un domaine linéaire, une architecture requiérant une hybridation en boucle fermée s'avère indispensable.

L'invention a notamment pour but de pallier les inconvénients précités. A cet effet, l'invention a pour objet A cet effet, l'invention a pour objet un dispositif d'hybridation en boucle fermée comportant un banc de filtres de Kalman, une plateforme virtuelle, un dispositif de calcul de pseudo-mesures estimées a priori. Le dispositif reçoit en entrée des incréments inertiels, des pseudo-mesures et délivre en sortie des mesures inertielles calculées par la plateforme virtuel auxquelles sont appliquées des corrections. Le banc de filtres de Kalman comporte :

- un filtre de Kalman principal adapté au calcul des corrections à appliquer aux mesures inertielles à partir de l'ensemble des pseudo-mesures disponibles ;
- au moins un nombre n de filtres de Kalman secondaires, n étant au égal au nombre de pseudo-mesures disponibles, chaque filtre de Kalman secondaire étant adapté au calcul des corrections à appliquer aux mesures inertielles à partir d'un sous-ensemble des pseudo-mesures disponibles.

Les corrections proviennent :

- soit du filtre de Kalman principal lorsqu'aucune pseudo-mesure n'est déclarée erronée ;
- soit du filtre de Kalman secondaire non affecté par une pseudo-mesure erronée ;

Les corrections sont appliquées simultanément aux mesures inertielles et à l'entrée de tous les autres filtres de Kalman du banc de filtres de Kalman.

Dans un mode de réalisation, une pseudo-mesure est déclarée erronée lorsqu'il existe un filtre de kalman secondaire proposant des corrections différentes des autres filtres de Kalman secondaires, ladite différence étant supérieure à un seuil fixé. Par exemple, une pseudo-mesure est déclarée erronée lorsqu'il existe un filtre de kalman secondaire proposant des corrections différentes des autres filtres de Kalman secondaires, ladite différence étant identifiée par la méthode de séparation du maximum de vraisemblance.

Dans un autre mode de réalisation, à un instant $t_n$, pour un entier j compris entre 1 et n, pour un entier k compris entre 1 et n, le vecteur d'état estimé $Xi_{n/n}$ par le $j^{ième}$ filtre de Kalman comportant les estimations des erreurs commises sur les mesures inertielles notées $G_n$, le $k^{ième}$ filtre de Kalman fournissant les corrections à la plateforme virtuelle, les corrections étant égales à $X^k_{n/n}$, les mesures inertielles corrigées sont égales à l'instant $t_n$ à la différence entre les mesures inertielles et l'estimation $X^k_{n/n}$, les corrections étant également transmises simultanément aux autres filtres de Kalman, ceux-ci s'ajustant en soustrayant à leur estimation $Xi_{n/n}$ l'estimation $X^k_{n/n}$ du filtre de Kalman utilisé pour générer les corrections.

A un instant $t_n$, avec un entier k, la correction peut être calculée en soustrayant à l'estimation $X_{n/n}$ de l'erreur toutes les corrections déjà appliquées entre l'instant $t_{n+1}$ et l'instant $t_{n+k-1}$. Les pseudo-mesures peuvent être calculées à partir des mesures inertielles corrigées auxquelles on retranche l'estimation $X_{n/n-1}$ de l'erreur.

L'invention a notamment pour avantages de permettre d'éviter la démultiplication des calculs inertiels extrêmement lourds en terme de taux de charge processeur, en évitant d'entretenir autant de dispositif de calculs inertiels que de filtres d'hybridation secondaires.

D'autres caractéristiques et avantages de l'invention apparaîtront à l'aide de la description qui suit faite en regard des dessins annexés qui représentent :

- la figure 1, un dispositif d'hybridation en boucle fermée selon l'état de l'art ;

- la figure 2, un dispositif d'hybridation en boucle fermée selon l'invention

- la figure 3, l'envoi des corrections calculées par le filtre de Kalman utilisé pour corriger la plateforme virtuelle vers la plateforme virtuelle et vers les autres filtres de Kalman dans une d'hybridation en boucle fermée selon l'invention ;

- la figure 4a, les corrections proposées par chaque filtre de Kalman du banc de filtres de Kalman avant l'application de la correction provenant d'un des filtres de Kalman sur les mesures inertielles;

- la figure 4b, les corrections proposées par chaque filtre de Kalman du banc de filtres de Kalman après l'application des corrections issues du $k^{ième}$ filtre de Kalman sur les mesures inertielles.

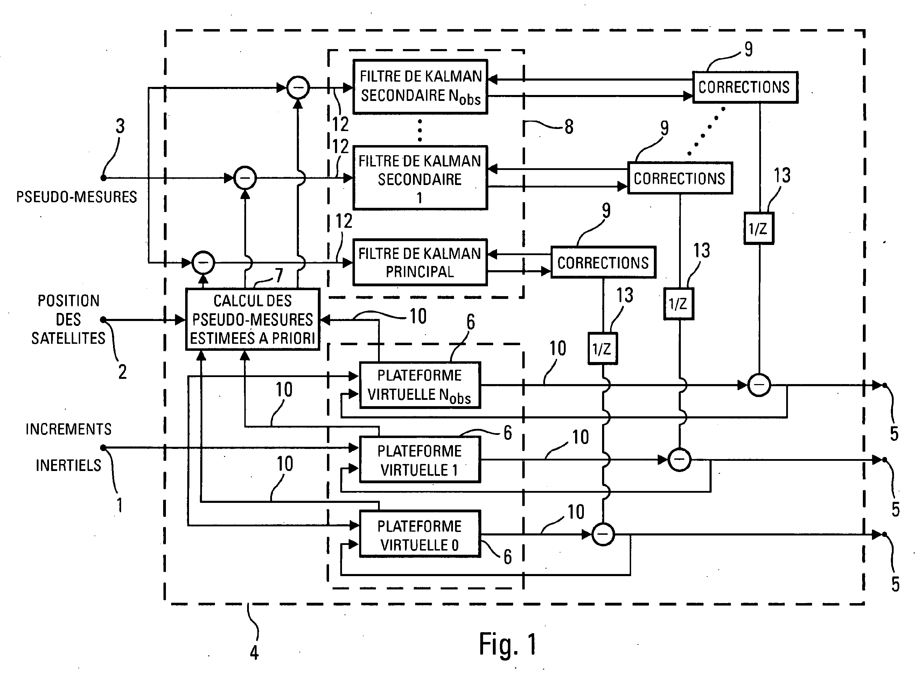

La figure 1 montre un dispositif d'hybridation en boucle fermée 4 selon l'état de l'art. Sur l'exemple de la figure 1, le dispositif d'hybridation en boucle fermée 4 utilise des informations fournies par une centrale inertielle et par un système de navigation par satellite. Une centrale inertielle comporte un ensemble de capteurs gyrométriques et accélérométriques associé à des moyens de traitement. Le dispositif d'hybridation en boucle fermée 4 reçoit des incréments inertiels 1 provenant des capteurs de la centrale inertielle. Les incréments inertiels 1 correspondent à des incréments de vitesse (incréments accélérométriques) et à des incréments angulaires (incréments gyrométriques). Des plate formes virtuelles 6 calculent à partir notamment des incréments inertiels 1 des informations de navigation inertielles 10 comme l'orientation, la vitesse ou la position du porteur dans un référentiel donné. C'est au sein des plateformes virtuelles 6 que les incréments angulaires et de vitesses sont compensés, intégrés, corrigés, projetés dans le repère d'expression des mesures inertielles Dans l'exemple du dispositif d'hybridation en boucle fermée 4, ces mesures inertielles 10 sont transmises à un dispositif de calcul de pseudo-mesures estimées a priori 7. Le dispositif de calcul des pseudo- mesures estimées a priori 7 reçoit aussi des données sur la position des satellites 2 composant la constellation du système de navigation par satellite utilisé. A partir d'une part des mesures inertielles 10 et d'autres part des données sur la position des satellites 2, le dispositif de calcul des pseudo-mesures estimées a priori 7 calcule les pseudo- mesures a priori 11 entre le porteur et les différents satellites de la constellation du système de navigation par satellite utilisé visible du porteur. En outre, le dispositif d'hybridation en boucle fermée 4 reçoit du système de navigation par satellite utilisé les pseudo- mesures 3 entre le porteur et les différents satellites visibles de la constellation dudit système de navigation par satellite utilisé. Il est alors possible de calculer les écarts appelés observations 12 entre les pseudo-mesures estimées a priori 7 et les pseudo- mesures 3. En vue de contrôler l'intégrité des mesures du système de navigation par satellite, le dispositif d'hybridation en boucle fermée 4 comporte encore un banc de filtres de Kalman 8 recevant toutes ou une partie des observations 12. Le banc de filtres de Kalman 8 comporte plusieurs filtres de Kalman en parallèle. A chaque plateforme virtuelles 6 est associé un filtre de Kalman. Aussi, lorsque le dispositif d'hybridation en boucle fermée 4 comporte $N_{Obs}+1$ plateformes virtuelles 6, le banc de filtres de Kalman 8 comporte $N_{Obs}+1$ filtre de Kalman. Un des filtres du banc de filtres de Kalman 8 est appelé filtre principal : il reçoit toutes les pseudo-mesures. Les autres filtres de Kalman du banc de filtres de Kalman 8 sont appelés filtres secondaires : ils ne reçoivent qu'une partie des pseudo-mesures disponibles, c'est-à-dire un sous-ensemble des pseudo-mesures disponibles. Le filtre de Kalman principal et les filtres de Kalman secondaires sont des filtres de Kalman fonctionnant avec les observations 12. Ces filtres réalisent l'hybridation entre les informations inertielles provenant de la centrale inertielle et les informations du système de navigation par satellite. Le rôle des filtres de Kalman est de maintenir la plateforme virtuelle 6 à laquelle ils sont attachées dans un domaine de fonctionnement linéaire image de celui modélisé dans le filtre de Kalman en calculant des corrections 9. Les corrections 9 sont ainsi appliquées aux mesures inertielles 10 du dispositif de calculs inertiels 6 (hybridation en boucle fermée) avec un retard 13 (la correction en entrée est la sortie retardée, liée notamment au temps de calcul). Le dispositif d'hybridation en boucle fermée 4 délivre en sortie 5 les mesures inertielles 10 auxquelles ont été appliquées les corrections 9 dans la plateforme virtuelle 6. Ces sorties sont appelées sorties hybrides et comportent les informations de vitesse, position et orientation relatives au porteur. Ces informations sont stables et peu bruitées, elles représentent les meilleures estimées au sens des moindres carrés des informations de navigation.

On rappelle le principe général du filtrage de Kalman :

Le filtrage de Kalman utilise un modèle d'état, établi sur la base de la connaissance avérée ou supposée du comportement des grandeurs physiques liées aux inconnues que l'on cherche à déterminer, en particulier l'orientation, la vitesse et la position du récepteur, et aux mesures disponibles, en l'occurrence les pseudo-distances de code et de porteuse ainsi que les pseudo-vitesses, l'ensemble de ces informations étant regroupé sous le terme de pseudo-mesures Le modèle d'état est constitué de :

- un vecteur d'état $X_n$ représentant les grandeurs physiques modélisées à l'instant $t_n$, comportant un nombre de composantes $N_{état}$ qui est a priori sans rapport avec le nombre de pseudo-mesures satellite reçues $N_{obs}$. $X_n$ regroupe l'ensemble des paramètres que le filtre cherche à estimer.
- un modèle de propagation, de la forme :

$$X_{n+1} = F_n . X_n + V_n$$

où :

$X_{n+1}$ est le vecteur d'état à l'instant $t_{n+1}$

$F_n$ est la matrice de propagation sur l'intervalle $[t_n, t_{n+1}]$, de dimension $[N_{état}; N_{état}]$. Cette matrice traduit l'évolution du vecteur d'état entre les deux instants de recalages $t_n$ et $t_{n+1}$.

$V_n$ est le vecteur bruit de modèle sur $[t_n, t_{n+1}]$. Ce bruit est supposé blanc, gaussien, de moyenne nulle. On lui associe la matrice de bruit de modèle $Q_n = E[V_n V_n^T]$ (où $V_n^T$ est le vecteur transposé de $V_n$) et de dimension $[N_{état}; N_{état}]$.

- un modèle d'observation, de la forme :

$$Z_n = H_n . X_n + W_n$$

Où:

$Z_n$ est le vecteur d'observation à l'instant $t_n$, de dimension $N_{obs}$. Ce vecteur contient l'ensemble des mesures relatives au système.

$H_n$ est la matrice d'observation à l'instant $t_n$, de dimension $[N_{obs}; N_{état}]$

$W_n$ est le vecteur bruit de mesure à l'instant $t_n$. Ce bruit est supposé blanc, gaussien, de moyenne nulle. On lui associe la matrice de bruit de mesure $R_n = E[W_n W_n^T]$ (où $W_n^T$ est le vecteur transposé de $W_n$) et de dimension $[N_{obs}; N_{obs}]$.

Dans ce modèle d'état, le vecteur d'état $X_n$ comporte l'ensemble des paramètres que l'on cherche à estimer à travers le vecteur d'observation. L'observation est réalisée par l'intermédiaire du modèle d'observation.

Le filtre de Kalman réalise la prédiction du vecteur d'état $X_n$ par un calcul de propagation, à partir du modèle de propagation, puis l'estimation du vecteur d'état $X_n$ par un calcul de recalage, à partir des observations et du modèle d'observation.

Pour cela le filtre procède en deux temps avec le vecteur d'état (prédiction et fourniture des informations a priori, recalage et fourniture des informations a posteriori) :

- le vecteur d'état estimé à l'instant $t_n$ est noté $X_{n/n}$ après recalage à l'instant $t_n$, le vecteur d'état propagé est noté $X_{n+1/n}$ après propagation entre les instants $t_n$ et $t_{n+1}$. Puis, on réitère le procédé, le vecteur d'état estimé à l'instant $t_{n+1}$ est noté $X_{n+1/n+1}$ après recalage à l'instant $t_{n+1}$, et ainsi de suite. Le vecteur $X_{n/n}$ est de dimension $N_{état}$.

- la matrice de covariance de l'état estimé $X_{n/n}$ à l'instant $t_n$ est notée $P_{n/n}$ après le recalage à l'instant $t_n$, la matrice de covariance de l'état propagé $X_{n+1/n}$ est notée $P_{n+1/n}$ après la propagation entre les instants $t_n$ et $t_{n+1}$. La matrice de covariance du vecteur d'état est de dimension $[N_{état};N_{état}]$.

Pour réaliser le calcul de propagation, le filtre utilise les formules :

Pour le vecteur d'état estimé :

$$X_{n+1/n} = F_n . X_{n/n}$$

Pour la matrice de covariance :

$$P_{n+1/n} = F_n . P_{n/n} . F_n^T + Q_n$$

(où $F_n^T$ est la matrice transposée de $F_n$)

Pour réaliser le calcul de recalage, le filtre utilise les formules :

Pour le gain de recalage :

$$K_{n+1} = P_{n+1/n} . H_{n+1}^T . ( H_{n+1} . P_{n+1/n} . H_{n+1}^T + R_{n+1} )^{-1}$$

(où $H_{n+1}^T$ est la matrice transposée de $H_{n+1}$)
Pour le vecteur d'état estimé :

$$X_{n+1/n+1} = X_{n+1/n} + K_{n+1} . ( Z_{n+1} - H_{n+1} . X_{n+1/n} )$$

Pour la matrice de covariance :

$$P_{n+1/n+1} = ( Id_{N_{état}} - K_{n+1} . H_{n+1} ) . P_{n+1/n}$$

(où $Id_{N_{état}}$ est la matrice identité de dimension $[N_{état};N_{état}]$)
Au départ, le vecteur d'état $X_0$ est initialisé à zéro et la matrice $P_0$ est initialisée avec les variances et covariances représentatives de l'incertitude sur les grandeurs physiques modélisées dans le vecteur d'état.

Le calcul de propagation fait intervenir les matrices $F_n$ et $Q_n$ pour déterminer le vecteur d'état a priori propagé $X_{n+1/n}$ à partir du vecteur d'état a posteriori estimé recalé $X_{n/n}$ et la matrice de covariance propagée $P_{n+1/n}$ à partir de la matrice de covariance recalée $P_{n/n}$.
Le calcul de recalage fait intervenir les observations $Z_{n+1}$ issues des mesures du récepteur et les matrices $H_{n+1}$ et $R_{n+1}$, pour déterminer le vecteur d'état a posteriori recalé $X_{n+1/n+1}$ à partir du vecteur d'état a priori propagé $X_{n+1/n}$ et la matrice de covariance recalée $P_{n+1/n+1}$ à partir de la matrice de covariance propagée $P_{n+1/n}$.
Ensuite on incrémente n de 1 (soit n = n+1), on recommence l'opération de propagation, puis l'opération de recalage, et ainsi de suite.

Interprétation physique du filtre de Kalman :

Les coefficients de la matrice de covariance $P_n$ représentent d'une part la variance de chacune des composantes du vecteur d'état estimé (termes diagonaux) et d'autre part la covariance des différentes paires de composantes de ce vecteur (termes non diagonaux). La matrice $P_n$ représente le degré de confiance qu'on attribue à l'estimation des différents éléments du vecteur d'état ainsi que le degré de corrélation entres les différents états entre eux.
La matrice de propagation $F_n$ établit la relation entre le vecteur d'état avant propagation et après propagation.
La matrice de covariance $Q_n$ de bruit de modèle permet de quantifier les approximations faites dans le modèle de propagation pour chaque composante du vecteur d'état $X_{n/n}$.

La matrice d'observations $H_n$ établit la relation entre le vecteur d'état et les mesures.

La matrice de covariance $R_n$ des bruits de mesure caractérise le bruit propre des mesures, c'est-à-dire le degré de confiance sur l'information comprise dans l'observation lors du recalage du filtre de Kalman.

Les filtres de Kalman ont notamment pour objet de modéliser et de mettre à jour, par l'intermédiaire du vecteur d'état, les corrections à apporter aux mesures inertielles 10, c'est-à-dire d'estimer les erreurs de navigations au sein de la plate-forme virtuelle 6. Lorsqu'un nombre $N_{obs}$ de satellites sont visibles par le porteur, le filtre de Kalman principal reçoit $N_{obs}$ pseudo-mesures regroupées au sein des observations 12. Les $N_{obs}$ filtres de Kalman secondaires calculent des corrections à l'aide de $(N_{obs}-1)$ pseudo-mesures satellites parmi les $N_{obs}$ observations 12. Dans le cas d'une hybridation en boucle fermée conforme à l'état de l'art, chaque filtre de Kalman élabore des corrections 9 qui sont appliquées ensuite aux mesures inertielles 10 calculées par le dispositif de calculs inertiels 6. Ainsi, chaque filtre de Kalman est associé à une plateforme virtuelle 6. Les corrections 9 modélisées dans les vecteurs d'état des filtres de Kalman permettent de rester dans le domaine linéaire de chaque plateforme virtuelle 6 cohérent avec l'évolution du système de navigation. Dans le cas d'une hybridation conforme à l'état de l'art, les filtres de Kalman secondaires sont indépendants entre eux et indépendant du filtre principal.

Dans le cas de la figure 1, c'est-à-dire lorsque l'on veut faire une hybridation en boucle fermée, c'est-à-dire appliquer les corrections calculées par le filtre de Kalman 8 au niveau de la plateforme inertielle 6, les corrections issues du filtre de Kalman sont directement appliquées sur le dispositif de calculs inertiels 6. Sur le long terme, les erreurs de navigation d'une centrale inertielle dérivent, sous l'influence notamment des défauts des capteurs qui la composent. La structure en boucle fermée est donc nécessaire lorsque la qualité des capteurs inertiels ne permet pas d'entretenir des mesures inertielles avec une erreur restant dans le domaine linéaire du modèle d'erreur utilisé par les filtres de Kalman du banc de filtres de Kalman 8 sur l'intervalle de temps sur lequel on travaille. Avec une hybridation en boucle fermée, la présence d'une panne satellite parmi les observations satellites utilisées par le filtre de Kalman se répercute directement sur les mesures inertielles 10 du dispositif de calculs inertiels 6, à moins d'entretenir autant de plateforme virtuelle 6 que de filtres de Kalman secondaires. Cela impliquerait la démultiplication des calculs inertiels au sein de plusieurs dispositifs de calculs inertiels 6. Dans ce cas, le filtre de Kalman n'utilisant pas la mesure erronée ne perturbe pas sa plateforme virtuelle, les données en sortie restent intègres.

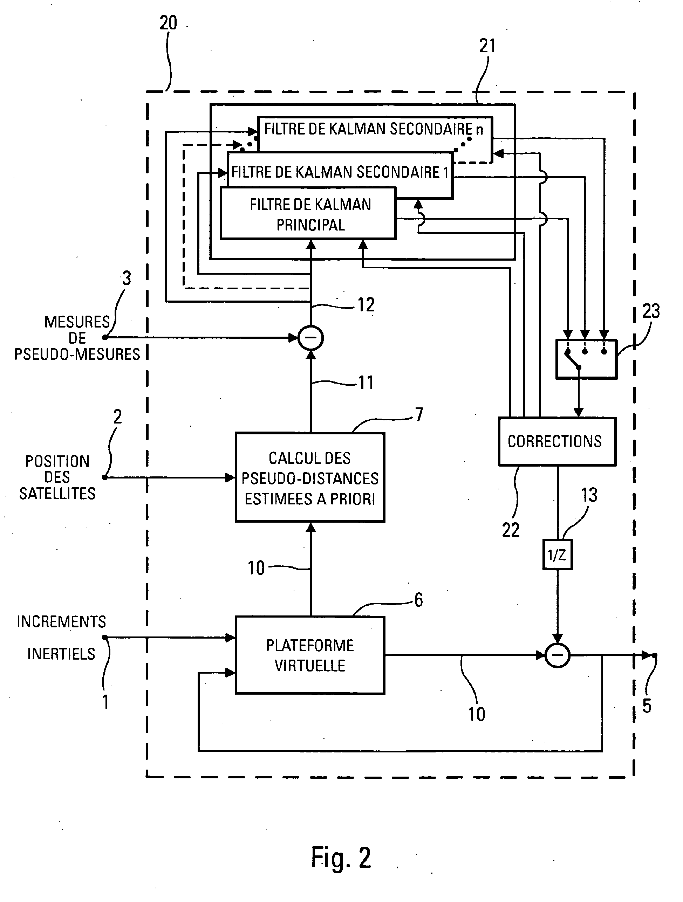

La figure 2 montre un dispositif d'hybridation en boucle fermée 20 selon l'invention. Les éléments identiques aux éléments déjà présentés sur la figure 1 portent les mêmes références. Le dispositif d'hybridation en boucle fermée selon l'invention reprend le principe du dispositif d'hybridation en boucle fermée 4 selon l'état de l'art, c'est-à-dire reposant sur le principe d'une hybridation en boucle fermée comportant un banc de filtres de Kalman 8. Le dispositif d'hybridation en boucle fermée 20 selon l'invention comporte en outre une seule plateforme virtuelle 6, un dispositif de calcul des pseudo-mesures estimées a priori 7. Le dispositif d'hybridation en boucle fermée 20 selon l'invention reçoit en entrée des incréments inertiels 1, des données sur la position des satellites 2, des pseudo- mesures 3. En sortie 5, le dispositif d'hybridation en boucle fermée 20 selon l'invention délivre les informations de navigation hybrides comportant les mesures inertielles 10 auxquelles sont appliquées des corrections 22. Le dispositif d'hybridation en boucle fermée 20 selon l'invention comporte un banc de filtres de Kalman 21. Le banc de filtres de Kalman 21 comporte un filtre de Kalman principal et des filtres de Kalman secondaires repérés à l'aide d'un indice variant de 1 à n, n étant un entier égal au nombre de mesures du système de navigation par satellite. A la différence du banc de filtres de Kalman 4 selon l'état de l'art, le banc de filtre de Kalman 21 permet :

- de calculer les corrections 22 à appliquer aux mesures inertielles 10, les corrections 22 venant de l'un des filtres de Kalman et
- d'appliquer simultanément ces corrections 22 non seulement aux mesures inertielles 10 mais aussi à l'entrée de tous les autres filtres de Kalman du banc de filtres de Kalman 21 qui ne corrigent pas les mesures inertielles 10.

Un dispositif de sélection 23 reçoit en entrée les corrections calculées par l'ensemble des filtres de Kalman et délivre en sortie les corrections du filtre de Kalman choisi. Le dispositif de sélection 23 choisit le filtre de Kalman principal lorsqu'aucune panne d'un des satelittes dans les observations 12 n'est détectée. Lorsqu'une panne d'un des satelittes est détecté, le dispositif de sélection 23 est le filtre de Kalman secondaire non affecté par ladite panne. Les corrections 22 proviennenent donc d'un seul filtre de Kalman. Les autres filtres de Kalman fonctionnent alors de manière cohérente par rapport au filtre de Kalman fournissant les corrections 22. Cette technique permet d'isoler un satellite qui envoie des données erronées. En effet, le $k^{ième}$ filtre de Kalman secondaire reçoit les pseudo-mesures provenant de tous les satellites sauf du $k^{ième}$. Ainsi, si le $k^{ième}$ satellite envoie des informations erronées, le $k^{ième}$ filtre de Kalman secondaire ne reçoit pas d'information corrompue et n'est pas perturbé. Contrairement au filtre de Kalman principal qui lui a reçu la mesure erronée et donc appliquerait une correction erronée aux mesures inertielles 10 s'il était utilisé pour corriger la plateforme virtuelle. Pour maintenir les filtres de Kalman dont les corrections ne sont pas appliquées à la plateforme virtuelle cohérents de la plateforme virtuelle, les corrections 22 du filtre de Kalman utilisé sont aussi communiquées aux autres filtres de Kalman. Les corrections 22 envoyées par le filtre de Kalman corrigeant la plateforme virtuelle aux autres filtres de Kalman sont vues comme des commandes agissant sur les états de chacun des filtres de Kalman. Le filtre de Kalman secondaire qui ne reçoit pas la mesure du satellite corrompu a un comportement s'éloignant de celui des autres filtres de Kalman secondaires et la comparaison à un seuil permet de détecter le satellite défectueux. Ainsi, une pseudo-mesure est déclarée erronée lorsqu'il existe un filtre de kalman secondaire proposant des corrections différentes des autres filtres de Kalman secondaires, ladite différence étant supérieure à un seuil fixé. On peut par exemple utiliser la méthode de séparation du maximum de vraisemblance. On peut ainsi corriger la plateforme virtuelle avec un filtre non pollué. Si le filtre de Kalman qui produit les corrections s'avère contaminé par une mesure fausse, le filtre de Kalman qui produit les corrections est changé en choisissant le filtre de Kalman réputé intègre après isolation de la panne qui est survenue.

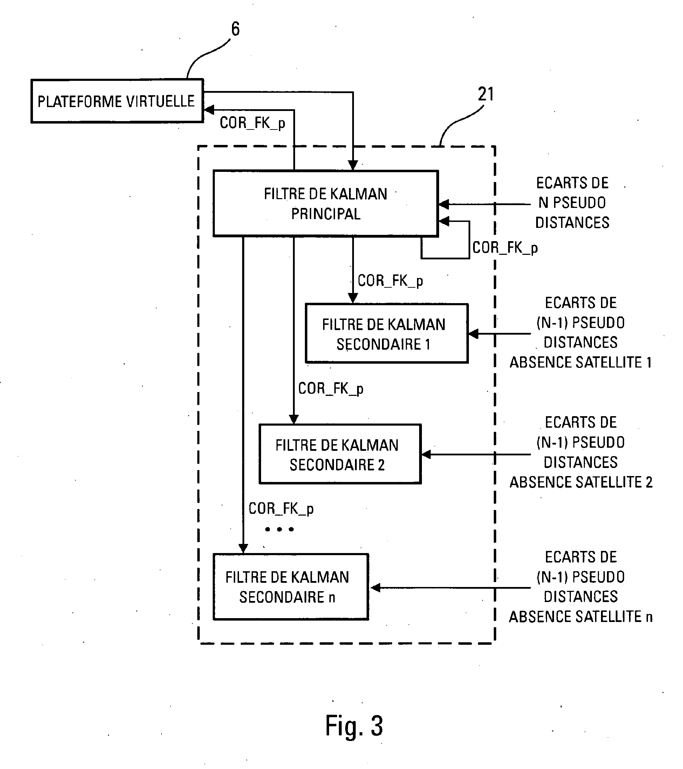

La figure 3 montre l'envoi des corrections calculées par le filtre de Kalman utilisé pour corriger la plateforme virtuelle vers la plateforme virtuelle et vers les autres filtres de Kalman dans une d'hybridation en boucle fermée 20 selon l'invention. La figure 3 montre un cas où aucune panne satellite n'est détectée. Dans ce cas, c'est le filtre de Kalman principal, celui qui reçoit toutes les pseudo-mesures satellite, qui pilote la plateforme virutelle 6 et communique ses corrections aux autres filtres de Kalman, qui sont dans ce cas les filtres de Kalman secondaires. Les éléments identiques aux éléments déjà présentés sur les figures précédentes portent les mêmes références. Le filtre de Kalman corrigeant la plateforme virtuelle 6 reçoit les n pseudo-mesures comprises parmi les observations 12, et calcule les corrections 22 à appliquer aux mesures inertielles 10. Pour cela, le filtre de Kalman génère des données de corrections COR_FK_p. Ces données de correction sont transmises pour être utilisées comme corrections 22 applicables aux mesures inertielles 10. Ces données de corrections COR_FK_p sont aussi transmises simultanément aux autres filtres de Kalman qui fonctionnent alors de manière cohérente par rapport au filtre de Kalman corrigeant la plateforme virtuelle 6. Rappelons que le $k^{\text{ième}}$ filtre de Kalman secondaire reçoit les pseudo-mesures provenant de tous les satellites sauf du $k^{\text{ième}}$.

A un instant $t_n$, on note $X^j_{n/n}$ le vecteur d'état estimé par le $j^{\text{ième}}$ filtre de Kalman. Ce vecteur comporte les estimations des erreurs commises sur les mesures inertielles 10, notées $G_n$. Si, à l'instant $t_n$, les mesures inertielles $G_n$ sont modifiées d'une quantité q connue, l'estimation $X^j_{n/n}$ doit être modifiée de la même quantité q. Aussi, si l'on suppose que le $k^{\text{ième}}$ filtre de Kalman fournit les corrections 22 à la plateforme virtuelle à l'instant $t_n$, les corrections 22 sont égales à $X^k_{n/n}$. Les mesures inertielles $G_n$ corrigées sont donc égales, à l'instant $t_n$, à la différence entre les mesures inertielles $G_n$ et l'estimation $X^k_{n/n}$. Les corrections 22 étant également transmises simultanément aux filtres de Kalman, ceux-ci s'ajustent en soustrayant à leur estimation $X^j_{n/n}$ l'estimation $X^k_{n/n}$ du filtre de Kalman utilisé pour générer les corrections 22. Lorsqu'une panne est détectée et identifiée, cas non représenté sur la figure 3, ce n'est plus le filtre de kalman principal mais le filtre de kalman secondaire resté intègre (c'est-à-dire celui qui n'observe pas la mesure satellite corrompue) qui corrige la plateforme virtuelle 6 et envoie ses corrections 22 aux autres filtres de kalman, c'est-à-dire au filtre de kalman principal et aux N-1 filtres de Kalman secondaires restants qui observent le satellite défaillant.

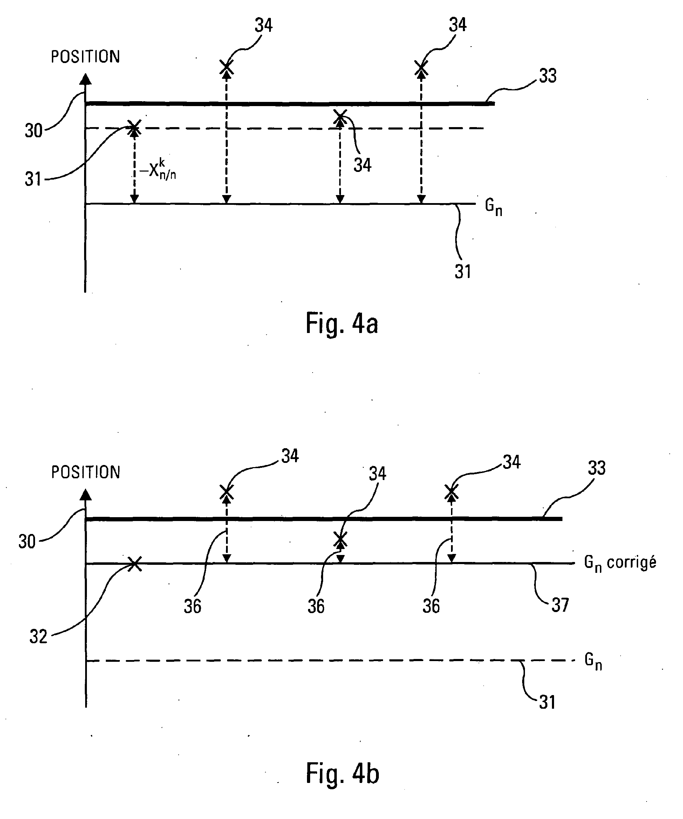

La figure 4a illustre par un diagramme les corrections proposées par chaque filtre de Kalman du banc de filtres de Kalman avant l'application de la correction provenant d'un des filtres de Kalman sur les mesures inertielles. La figure 4b illustre par un diagramme les corrections proposées par chaque filtre de Kalman du banc de filtres de Kalman après l'application des corrections issues du $k^{\text{ième}}$ filtre de Kalman sur les mesures inertielles. Sur la figure 4a, le diagramme, représenté à un instant donné, comporte un axe des ordonnées 30 représentant une position. La droite 31 représente les mesures inertielles $G_n$ telles que calculées par la plateforme virutelle avant l'application des corrections 22. Le point 32 représente la position déduite de l'estimation $X^k_{n/n}$ de l'erreur par le filtre de Kalman utilisé pour la correction de la plateforme virtuelle. Les points 34 représentent les positions déduites des estimations $X^j_{n/n}$ de l'erreur par les autres filtres de Kalman. La droite 33 représente la position réelle non connue du porteur que l'on cherche à estimer au travers des sorties hybrides. Les mesures inertielles 10 corrigées seront après application des corrections 22 égales aux mesures inertielles $G_n$ moins l'estimation $X^k_{n/n}$ de l'erreur du filtre de Kalman corrigeant la PFV. Sur la figure 4b, le diagramme, représenté à un instant donné après applications des corrections 22, comporte un axe des ordonnées 30 représentant une position. La droite 31 représente les mesures inertielles $G_n$ telles que calculées par le dispositif de calcul des mesures inertielles 6 avant l'application des corrections 22. Le point 32 représente la position déduite de l'estimation $X^k_{n/n}$ de l'erreur du filtre de Kalman utilisé. La droite 37 représente les mesures inertielles 10 corrigées. Les estimations $X^j_{n/n}$ de l'erreur des autres filtres de Kalman ne sont plus calculées par rapport à la droite 31 mais par rapport à la droite 37. On constate sur la figure 4b que l'application de la correction simultanément aux vecteurs d'état recalés $X^j_{n+1/n+1}$ des filtres de Kalman non utilisés pour piloter la plateforme virtuelle et aux mesures inertielles 10 corrigées ne change pas les positions calculées à partir des estimations $X^j_{n/n}$.

L'application des corrections 22 peut avoir du retard, notamment à cause d'un temps de calcul non nul de ces corrections. Les corrections 22 peuvent alors être calculées à partir d'observations 12 antérieures. De plus, le délai d'application des corrections 22 peut aussi être volontaire pour attendre la confirmation de la validité des mesures inertielles 10 effectuées. On utilise pour désigner ce cas de figure l'expression anglo-saxonne de « Time To Alarm ». Pour cela, les corrections 22 sont alors appliquées aux mesures inertielles 10 et à tous les filtres de Kalman du banc de filtres de Kalman 21 au même instant mais avec un certain retard. On peut aussi s'assurer alors que les corrections 22 correspondant à l'écart entre la position inertielle et la position vraie, restent dans le domaine linéaire du modèle de propagation des erreurs.

Dans un mode particulier de réalisation, notamment pour éviter de surcompenser l'erreur des mesures inertielles 10 et donc d'engendrer des oscillations sur les vecteurs d'état estimés dans les filtres de Kalman, on peut anticiper à un instant $t_n$, les corrections calculées entre l'instant $t_n$ et un instant $t_{n+k-1}$ (avec k un entier) et appliquées aux mesures inertielles 10 à l'instant $t_{n+k}$. Pour ce faire, on peut calculer la correction à l'instant $t_n$ en soustrayant à l'estimation $X_{n/n}$ de l'erreur toutes les corrections déjà appliquées entre l'instant $t_{n+1}$ et l'instant $t_{n+k-1}$.

Dans un mode de réalisation, le calcul des observations 12 utilisées pour recaler les différents filtres peut aussi se faire en utilisant les positions hybrides, à la place des informations inertielles en sortie de la plateforme inertielle, de manière à observer des écarts plus petits. Dans ce cas, on utilise pour calculer les pseudo-mesures, la position inertielle propagée $G_n$ à laquelle on retranche l'estimation $X_{n/n-1}$ de l'erreur.

La description prend comme exemple pour décrire l'invention d'un dispositif utilisant des informations fournies par une centrale inertielle et par un système de navigation par satellite. Bien évidemment, le dispositif d'hybridation selon l'invention n'est pas seulement applicable aux mesures satellites, mais à toutes sources de mesures indépendantes dont on voudrait surveiller la cohérence. Par exemple, le dispositif d'hybridation selon l'invention peut être employé pour un système de positionnement par satellite (sans centrale inertielle).

En outre, le nombre de filtres de Kalman principal et secondaires présenté dans les figures et décrit n'est pas limitatif. L'invention peut être utilisé en fonction des besoins avec un nombre de filtre plus ou moins important. Il est ainsi possible de réaliser un dispositif selon l'invention comportant un nombre n*(n-1)/2 de filtres recevant chacun (n-2) pseudo-mesures.

Le dispositif selon l'invention utilise des filtres de Kalman. Il est cependant possible de remplacer ces filtres de Kalman par d'autres types de filtre remplissant notamment les fonction d'observations, prédiction et propagation.

Les fonctions du dispositif selon l'invention peuvent être mises en oeuvre par un ou plusieurs calculateurs, comme par exemple un calculateur de gestion de vol dans le cas d'un aéronef.

**Revendications**

1. Dispositif d'hybridation en boucle fermée (20) comportant un banc de filtres de Kalman (21), une plateforme virtuelle (6), un dispositif de calcul de pseudo-mesures estimées a priori (7), ledit dispositif recevant en entrée des incréments inertiels (1), des pseudo-mesures et délivrant en sortie (5) des mesures inertielles (10) calculées par la plateforme virtuel (6) auxquelles sont appliquées des corrections (22) **caractérisé en ce que** le banc de filtres de Kalman (21) comporte:

   - un filtre de Kalman principal adapté au calcul des corrections (22) à appliquer aux mesures inertielles (10) à partir de l'ensemble des pseudo-mesures disponibles ;
   - au moins un nombre n de filtres de Kalman secondaires, n étant au égal au nombre de pseudo-mesures disponibles, chaque filtre de Kalman secondaire étant adapté au calcul des corrections (22) à appliquer aux mesures inertielles (10) à partir d'un sous-ensemble des pseudo-mesures disponibles;

   les corrections (22) provenant :

   - soit du filtre de Kalman principal lorsqu'aucune pseudo-mesure n'est déclarée erronée ;
   - soit du filtre de Kalman secondaire non affecté par une pseudo-mesure erronée;

   lesdites corrections (22) étant appliquées simultanément aux mesures inertielles (10) et à l'entrée de tous les autres filtres de Kalman du banc de filtres de Kalman (21).

2. Dispositif selon la revendication 1 **caractérisé en ce qu'**une pseudo-mesure est déclarée erronée lorsqu'il existe un filtre de kalman secondaire proposant des corrections (22) différentes des autres filtres de Kalman secondaires, ladite différence étant supérieure à un seuil fixé.

3. Dispositif selon la revendication 2 **caractérisé en ce qu'**une pseudo-mesure est déclarée erronée lorsqu'il existe un filtre de kalman secondaire proposant des corrections (22) différentes des autres filtres de Kalman secondaires, ladite différence étant identifiée par la méthode de séparation du maximum de vraisemblance.

4. Dispositif selon l'une des quelconques revendications précédentes, **caractérisé en ce que**, à un instant $t_n$, pour un entier j compris entre 1 et n, pour un entier k compris entre 1 et n, le vecteur d'état estimé $X^j_{n/n}$ par le $j^{ème}$ filtre de Kalman comportant les estimations des erreurs commises sur les mesures inertielles (10) notées $G_n$, le $k^{ième}$ filtre de Kalman fournissant les corrections (22) à la plateforme virtuelle (6), les corrections (22) étant égales à $X^k_{n/n}$, les mesures inertielles (10) corrigées sont égales à l'instant $t_n$ à la différence entre les mesures inertielles (10) et l'estimation $X^k_{n/n}$, les corrections (22) étant également transmises simultanément aux autres filtres de Kalman, ceux-ci s'ajustant en soustrayant à leur estimation $X^j_{n/n}$ l'estimation $X^k_{n/n}$ du filtre de Kalman utilisé pour générer les corrections (22).

**5.** Dispositif selon la revendication 4, **caractérisé en ce que**, à un instant $t_n$, avec un entier k, la correction (22) est calculée en soustrayant à l'estimation $X_{n/n}$ de l'erreur toutes les corrections déjà appliquées entre l'instant $t_{n+1}$ et l'instant $t_{n+k-1}$.

**6.** Dispositif selon l'une des quelconques revendications 4 à 5 **caractérisé en ce que** les pseudo-mesures sont calculées à partir des mesures inertielles (10) corrigées auxquelles on retranche l'estimation $X_{n/n-1}$ de l'erreur.

## Claims

**1.** Closed loop hybridisation device (20) which comprises a bank of Kalman filters (21), a virtual platform (6), a device for calculating pseudo-measurements (7) estimated a priori, the device receiving at the input inertial increments (1), pseudo-measurements and providing at the output (5) inertial measurements (10) calculated by the virtual platform (6) to which corrections (22) are applied, **characterised in that** the bank of Kalman filters (21) comprises:

- a main Kalman filter which is capable of calculating the corrections (22) to be applied to the inertial measurements (10) from the set of pseudo-measurements available;
- at least a number n of secondary Kalman filters, n being equal to the number of pseudo-measurements available, each secondary Kalman filter being capable of calculating the corrections (22) to be applied to the inertial measurements (10) from a subset of the available pseudo-measurements;

the corrections (22) originating:

- either from the main Kalman filter when no pseudo-measurement has been declared to be erroneous;
- or from the secondary Kalman filter not affected by an erroneous pseudo-measurement;

the corrections (22) being applied simultaneously to the inertial measurements (10) and to the input of all the other Kalman filters of the bank of Kalman filters (21).

**2.** Device according to claim 1, **characterised in that** a pseudo-measurement is declared to be erroneous when a secondary Kalman filter exists which proposes corrections (22) which are different from the other secondary Kalman filters, the difference being greater than a fixed threshold.

**3.** Device according to claim 2, **characterised in that** a pseudo-measurement is declared to be erroneous when a secondary Kalman filter exists which proposes corrections (22) which are different from the other secondary Kalman filters, the difference being identified by means of the maximum probability separation method.

**4.** Device according to any one of the preceding claims, **characterised in that**, at a time $t_n$, for a whole number j between 1 and n, for a whole number k between 1 and n, the status vector $X^j_{n/n}$ estimated by the $j^{th}$ Kalman filter comprising the estimates of the errors committed on the inertial measurements (10) designated $G_n$, the $k^{th}$ Kalman filter providing the corrections (22) to the virtual platform (6), the corrections (22) being equal to $X^k_{n/n}$, the corrected inertial measurements (10) are equal at the time $t_n$ to the difference between the inertial measurements (10) and the estimate $X^k_{n/n}$, the corrections (22) also being transmitted simultaneously to the other Kalman filters that adjust themselves by subtracting from their estimate $X^j_{n/n}$ the estimate $X^k_{n/n}$ of the Kalman filter used to generate the corrections (22).

**5.** Device according to claim 4, **characterised in that**, at a time $t_n$, with a whole number k, the correction (22) is calculated by subtracting from the estimate $X_{n/n}$ of the error all the corrections already applied between the time $t_{n+1}$ and the time $t_{n+k-1}$.

**6.** Device according to either claim 4 or claim 5, **characterised in that** the pseudo-measurements are calculated from the corrected inertial measurements (10) from which the estimate $X_{n/n-1}$ of the error is subtracted.

**Patentansprüche**

1. Hybridisierungsvorrichtung mit geschlossenem Regelkreis (20), die eine Kalman-Filtergruppe (21), eine virtuelle Plattform (6), eine Vorrichtung zum Berechnen von zuvor geschätzten Pseudomesswerten (7) umfasst, wobei die Vorrichtung am Eingang Trägheitsinkremente (1), Pseudomesswerte empfängt und am Ausgang (5) von der virtuellen Plattform (6) berechnete Trägheitsmesswerte (10) ausgibt, auf die Korrekturen (22) angewendet werden, **dadurch gekennzeichnet, dass** die Kalman-Filtergruppe (21) Folgendes umfasst:

   - ein Kalman-Hauptfilter zum Berechnen der auf die Trägheitsmesswerte (10) anzuwendenden Korrekturen (22) anhand der Gesamtmenge der verfügbaren Pseudomesswerte;
   - wenigstens eine Anzahl n von sekundären Kalman-Filtern, wobei n gleich der Zahl der verfügbaren Pseudomesswerte ist, wobei jedes sekundäre Kalman-Filter zum Berechnung der auf die Trägheitsmesswerte (10) anzuwendenden Korrekturen (22) anhand einer Teilmenge der verfügbaren Pseudomesswerte ausgelegt ist;

   wobei die Korrekturen (22) von einem der Folgenden kommen:

   - entweder vom Kalman-Hauptfilter, wenn kein Pseudomesswert als falsch deklariert wird;
   - oder von dem sekundären Kalman-Filter, das durch einen falschen Pseudomesswert nicht beeinflusst wird;

   wobei die Korrekturen (22) gleichzeitig auf Trägheitsmesswerte (10) und auf den Eingang aller anderen Kalman-Filter der Kalman-Filtergruppe (21) angewendet werden.

2. Vorrichtung nach Anspruch 1, **dadurch gekennzeichnet, dass** ein Pseudomesswert dann als falsch deklariert wird, wenn es ein sekundäres Kalman-Filter gibt, das Korrekturen (22) vorschlägt, die sich von anderen sekundären Kalman-Filtern unterscheiden, wobei die Differenz größer als ein fester Schwellenwert ist.

3. Vorrichtung nach Anspruch 2, **dadurch gekennzeichnet, dass** ein Pseudomesswert dann als falsch deklariert wird, wenn es ein sekundäres Kalman-Filter gibt, das Korrekturen (22) vorschlägt, die sich von anderen sekundären Kalman-Filtern unterscheiden, wobei die Differenz mit der Trennmethode der maximalen Wahrscheinlichkeit identifiziert wird.

4. Vorrichtung nach einem der vorherigen Ansprüche, **dadurch gekennzeichnet, dass** zu einem Zeitpunkt $t_n$ für eine ganze Zahl j zwischen 1 und n, für eine ganze Zahl k zwischen 1 und n, wobei der Zustandsvektor, der vom j-ten Kalman-Filter auf $X^j_{n/n}$ geschätzt wird, die bei den Trägheitsmesswerten (10) begangenen Fehler umfasst, die mit $G_n$ notiert werden, wobei das k-te Kalman-Filter die Korrekturen (22) zur virtuellen Plattform (6) liefert, wobei die Korrekturen (22) gleich $X^k_{n/n}$ sind, die korrigierten Trägheitsmesswerte (10) zum Zeitpunkt $t_n$ gleich der Differenz zwischen den Trägheitsmesswerten (10) und der Schätzung $X^k_{n/n}$ sind, wobei die Korrekturen (22) auch gleichzeitig zu den anderen Kalman-Filtern übertragen werden, wobei diese sich anpassen, indem sie von ihrer Schätzung $X^j_{n/n}$ die Schätzung $X^k_{n/n}$ des zum Erzeugen der Korrekturen (22) verwendeten Kalman-Filters subtrahieren.

5. Vorrichtung nach Anspruch 4, **dadurch gekennzeichnet, dass** zu einem Zeitpunkt $t_n$, mit einer ganzen Zahl k, die Korrektur (22) berechnet wird, indem von der Schätzung $X_{n/n}$ des Fehlers alle zwischen dem Zeitpunkt $t_{n+1}$ und dem Zeitpunkt $t_{n+k-1}$ bereits angewendeten Korrekturen subtrahiert werden.

6. Vorrichtung nach einem der Ansprüche 4 bis 5, **dadurch gekennzeichnet, dass** die Pseudomesswerte anhand der korrigierten Trägheitsmesswerte (10) berechnet werden, von denen die Schätzung $X_{n/n-1}$ des Fehlers subtrahiert wird.

Fig. 1

Fig. 2

6

PLATEFORME VIRTUELLE

COR_FK_p

21

FILTRE DE KALMAN
PRINCIPAL

ECARTS DE
N PSEUDO
DISTANCES

COR_FK_p

COR_FK_p

FILTRE DE KALMAN
SECONDAIRE 1

ECARTS DE
(N-1) PSEUDO
DISTANCES
ABSENCE SATELLITE 1

COR_FK_p

FILTRE DE KALMAN
SECONDAIRE 2

ECARTS DE
(N-1) PSEUDO
DISTANCES
ABSENCE SATELLITE 2

COR_FK_p

• • •

FILTRE DE KALMAN
SECONDAIRE n

ECARTS DE
(N-1) PSEUDO
DISTANCES
ABSENCE SATELLITE n

Fig. 3

POSITION

34    34

33

30

31    $-X_{n/n}^{k}$    34

$G_n$

31

## Fig. 4a

POSITION

34    34    33

34

30

$G_n$ corrigé

32    36    36    36    37

$G_n$

31

## Fig. 4b